**Europäisches Patentamt**

(19) **European Patent Office**

**Office européen des brevets**

(11) Veröffentlichungsnummer: **0 092 105**
**B1**

(12) **EUROPÄISCHE PATENTSCHRIFT**

(45) Veröffentlichungstag der Patentschrift:
**17.09.86**

(21) Anmeldenummer: **83103343.6**

(22) Anmeldetag: **06.04.83**

(51) Int. Cl.⁴: **B 60 R 22/20**

(54) Verstellvorrichtung für einen An- oder Umlenkpunkt eines Sicherheitsgurts.

(30) Priorität: **21.04.82 DE 3214712**

(43) Veröffentlichungstag der Anmeldung:
**26.10.83 Patentblatt 83/43**

(45) Bekanntmachung des Hinweises auf die Patenterteilung:
**17.09.86 Patentblatt 86/38**

(84) Benannte Vertragsstaaten:
**DE FR GB IT SE**

(56) Entgegenhaltungen:
**DE - A - 2 522 415**
**DE - A - 2 726 261**
**FR - A - 2 353 419**
**FR - A - 2 484 343**
**FR - A - 2 513 887**

(73) Patentinhaber: **BAYERISCHE MOTOREN WERKE**
**Aktiengesellschaft, Postfach 40 02 40 Petuelring 130,**
**D-8000 München 40 (DE)**

(72) Erfinder: **Radermacher, Karl-Heinz, Dr. Ing.,**
**Hindenburgstrasse 37, D-8134 Pöcking (DE)**
Erfinder: **Haberl, Josef, Dipl.-Phys., Jupiterweg 7,**
**D-8011 Aschheim (DE)**

(74) Vertreter: **Bullwein, Fritz, Bayerische Motoren Werke**
**Aktiengesellschaft**
**Postfach 40 02 40 Petuelring 130 AJ-33,**
**D-8000 München 40 (DE)**

## Beschreibung

Die Erfindung bezieht sich auf eine Verstellvorrichtung für einen An- oder Umlenkpunkt eines Sicherheitsgurts in Kraftfahrzeugen, die mit einem den An- oder Umlenkpunkt bildenden Läufer, der in einer Führung vertikal so verstellbar ist, dass der Anlenkwinkel des auf der Schulter des Fahrzeuginsassen aufliegenden Sicherheitsgurts einen vorgegebenen Wert besitzt.

Eine derartige Verstellvorrichtung ist bei einem passiven Sicherheitsgurt bekannt. Dabei wird in der Führung des Sicherheitsgurts eine mechanische Sperrscheibe entsprechend dem Anlenkwinkel verdreht. Die Sperrscheibe gelangt beim vorgegebenen Wert des Anlenkwinkels in Wirkstellung und hält den Läufer an einem von mehreren, in diskreten Höhenlagen angeordneten Anschlägen in Anlage (DE-A 2 522 415).

Diese bekannte Vorrichtung ist mechanisch sehr aufwendig und vermag, bedingt durch die Einstellung des Läufers lediglich gleichsam digital in einer von mehreren definierten Höhenlagen in der Regel nur ungefähr die Einstellung des «optimalen» Anlenkwinkels.

Der Erfindung liegt die Aufgabe zugrunde, eine Verstellvorrichtung der eingangs genannten Art zu schaffen, die auf konstruktiv einfache Weise eine exakte Einstellung des Anlenkwinkels auf den vorgegebenen Wert ermöglicht.

Die Erfindung löst diese Aufgabe durch einen in oder am Anlenkwinkel angeordneten elektrischen Geber für den Anlenkwinkel des Sicherheitsgurts und eine diesem nachgeschaltete Vergleichsschaltung, die den vorgegebenen Wert (des Anlenkwinkels) enthält.

Die Erfindung beruht auf der grundlegenden Überlegung, die bei der bekannten Sperrscheibe gleichzeitig realisierten Funktionen der (mechanischen) Bestimmung des Anlenkwinkels und der Einstellung dieses Winkels auf den vorgegebenen Wert zu entkoppeln und lediglich den tatsächlich vorliegenden Anlenkwinkel selbständig zu gewinnen. Dadurch eröffnen sich verschiedene Möglichkeiten, den Anlenkwinkel einzustellen. Ferner ergibt sich auch durch die Verwendung elektrischer Teile eine störsichere und langzeitstabile Vorrichtung.

Der bei der Erfindung gewonnene Wert des tatsächlichen Anlenkwinkels kann in verschiedener Weise weiterverarbeitet werden. So ist es möglich, eine manuell zu bedienende Verstellvorrichtung vorzusehen und durch beispielsweise optische Gegenüberstellung des tatsächlichen und des vorgegebenen Werts des Anlenkwinkels dessen Einstellung auf den exakten Wert zu unterstützen.

Alternativ hierzu bietet sich eine automatische Einstellung des Anlenkwinkels an. Hiermit beschäftigen sich eine Reihe von Ausgestaltungen der Erfindungen, die Verbesserungen der einzelnen Komponenten der Vorrichtung zum Ziel haben.

Eine Verbesserung betrifft den an sich aus der DE-OS 2 522 415 bekannten Antrieb des Läufers.

Während dort ein mechanisch wirkender Antrieb vorgesehen ist, kann der Erfindungsgedanke durch Verwendung eines Elektromotors als Antrieb weitergebildet werden. Dieser Motor wird durch die Vergleichsschaltung so gesteuert, dass der Anlenkwinkel den vorgegebenen Wert besitzt. Damit verbunden ist die nunmehr realisierte Möglichkeit, die Vorrichtung nicht nur, wie bei der bekannten Vorrichtung, unmittelbar nach Schliessen der Fahrzeugtür, sondern beispielsweise während der gesamten Fahrt wirksam sein zu lassen. Gerade bei längeren Fahrten verändern die Fahrzeuginsassen mehrmals ihre Sitzposition. Durch den Elektromotor wird es möglich, den Anlenkwinkel stets nachzuregeln, so dass der Sicherheitsgurt immer ideal anliegt. Die Vorrichtung kann stets betriebsbereit sein, das durch den Geber für den Anlenkwinkel gelieferte, stets aktuelle Signal kann sofort in eine entsprechende Steuerung des Elektromotors umgesetzt werden.

Die Höhenverstellung des Läufers kann dabei auf konstruktiv einfache Weise mit Hilfe einer Spindel erfolgen, die vom Elektromotor angetrieben ist.

Zu dieser antriebsmässigen Weiterbildung des Erfindungsgedankens passen als Ergänzung andere Weiterbildungen, die auf steuerungstechnischem Gebiet liegen. Dabei handelt es sich zum einen darum, die Vergleichsschaltung nur bei angelegtem Sicherheitsgurt einzuschalten. Auf diese Weise erübrigen sich Massnahmen, die bei nicht angelegtem Sicherheitsgurt ein Einschalten der Einstellhilfen für die manuelle Verstellvorrichtung und bei automatischem Betrieb ein Einschalten des Elektromotors verhindern. Als Indikator für den angelegten Sicherheitsgurt kann ein einfacher Schalter vorgesehen sein, der im Gurtenschloss enthalten und durch die Gurtzunge betätigt ist. Zum anderen können Endlagerschalter in der Bahn des Läufers vorgesehen sein, die den Elektromotor ausschalten. Dadurch wird im Störfall und bei extremen Grössen der Fahrzeuginsassen ein unnötiger Betrieb des Elektromotors vermieden.

Ebenfalls auf steuerungstechnischem Gebiet liegt eine weitere Verbesserung der Erfindung, die sich insbesondere auf die Vergleichsschaltung auswirkt.

Zunächst ist der Anlenkwinkel selbst von Interesse. Es hat sich gezeigt, dass der optimale Anlenkwinkel für einen Fahrzeugtyp zumindest näherungsweise eine Konstante ist. Das bedeutet, dass bei einem Fahrzeugtyp der Anlenkwinkel für grosse und kleine Fahrzeuginsassen bei exakt sitzendem Sicherheitsgurt denselben Wert besitzt. Hingegen benötigen dieselben Insassen bei einem anderen Fahrzeugtyp einen möglicherweise deutlich unterschiedlichen Anlenkwinkel des Sicherheitsgurts. Dieser Umstand lässt sich dadurch auf einfache Weise berücksichtigen, dass der in der Vergleichsschaltung enthaltene vorgegebene Wert des Anlenkwinkels fahrzeugspezifisch ist.

Abschliessend sei eine Verbesserung der Erfindung genannt, die sich mit dem konstruktiven Aufbau des Anlenkwinkel-Gebers selbst beschäftigt. Dieser Geber kann konstruktiv einfach in Form eines Drehpotentiometers realisiert werden.

Diese bzw. auch andere Ausführungen des Gebers lassen sich in ihrem Bauvolumen begrenzen, wenn sie zumindest teilweise in einem den Anlenkwinkel des Sicherheitsgurts einstellenden Drehgelenk integriert sind. Eine derartige Integration ist an sich bereits aus der DE-C 2 929 420 bekannt. Dabei handelt es sich um ein im Drehgelenk eines Motorboot-Antriebs integriertes und als Trimmgeber dienendes Drehpotentiometer. In der Zeichnung ist ein Ausführungsbeispiel der Erfindung dargestellt und wird im folgenden beschrieben. Dabei zeigen

Fig. 1 eine perspektivische Ansicht einer Verstellvorrichtung entsprechend der Erfindung und
Fig. 2 einen Schnitt längs der Linie II–II in Fig. 1.

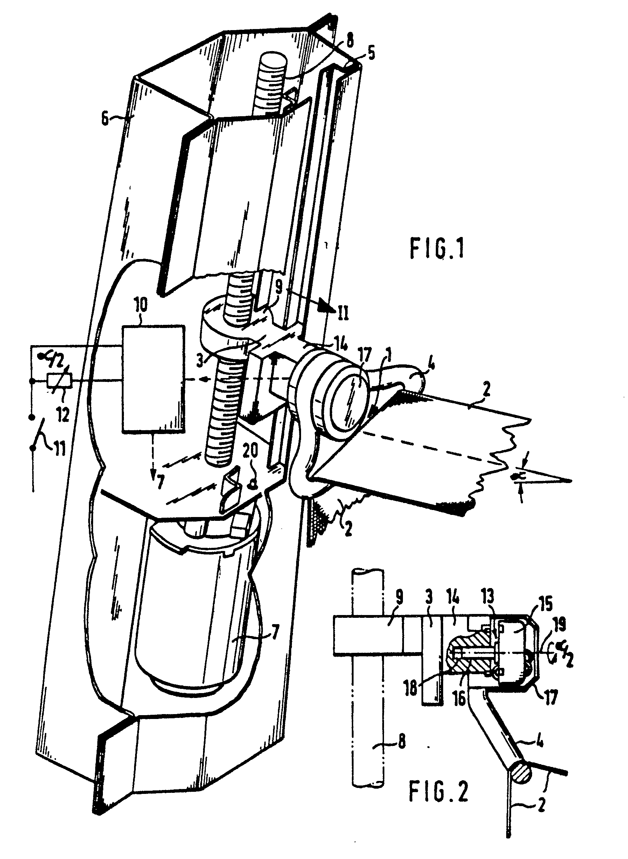

Die in Fig. 1 gezeigte Verstellvorrichtung dient dazu, den An- oder Umlenkpunkt 1 eines Sicherheitsgurts 2 in seiner Höhenlage auf einen vorgegebenen Wert einzustellen. Sie enthält einen Läufer 3, der einen den An- oder Umlenkpunkt 1 bildenden Umlenkbeschlag 4 trägt und in einer Führungsschiene 5, die sich in der sogenannten B-Säule 6 eines Kraftfahrzeugs befindet, in der Höhe verstellbar ist.

Hierzu dient ein Antrieb, in Form eines Elektromotors 7, der eine Spindel 8 dreht. Die Spindel 8 verläuft, in der dargestellten Ansicht, ausserhalb der Führungsschiene 5 und wird von einem, mit einem Gewinde versehenen Ausleger 9 des Läufers 3 umschlossen. Der Elektromotor 7 seinerseits wird durch eine schematisch dargestellte Vergleichsschaltung 10 gesteuert, die über einen Gurtschloss-Schalter 11 eingeschaltet wird. Der Schalter 11 ist bei in ein nicht dargestelltes Gurtschloss eingesteckter Gurtzunge des Sicherheitsgurts 2 geschlossen und verbindet dann die Vergleichsschaltung 10 mit einer Stromquelle (+).

Die Vergleichsschaltung 10 enthält einen vorgegebenen Wert des Anlenkwinkels des Sicherheitsgurts 2. Dieser Wert kann von aussen, beispielsweise mit Hilfe eines verstellbaren Potentiometers 12 eingestellt werden.

Dieser vorgegebene, beispielsweise fahrzeugspezifisch gewählte Wert wird mit dem aktuellen Wert des Anlenkwinkels $\alpha_{ist}$ verglichen. Zur Bestimmung des aktuellen Werts dient ein Drehpotentiometer 13, das in einen ein Drehgelenk für den Umlenkbeschlag 4 bildenden Bolzen 14 integriert ist (Fig. 2). Der Bolzen 14 ist ein weiterer Ausleger des Läufers 3.

Der konstruktive Aufbau des Bolzens 14 bzw. des darin intgegrierten Drehpotentiometers 13 ist in Fig. 2 gezeigt. Das Drehpotentiometer besteht aus einem Drehteil 15 und einem Festteil 16. Das Drehteil 15 ist in einem mit dem Umlenkbeschlag 4 verbundenen Deckel 17 gehalten, während das Festteil in einer Bohrung 18 des Bolzens 14 sitzt.

Durch den Elektromotor 7 wird über den Läufer 3 der Umlenkbeschlag 4 in seiner Höhe so verstellt, dass der Anlenkwinkel $\alpha_{ist}$ des Sicherheitsgurtes 2 gleich dem vorgegebenen Wert $\alpha_{soll}$ ist. Der Anlenkwinkel $\alpha$ ist der Winkel, den der Sicherheitsgurt 2 bei seiner Auflage auf der Schulter des Fahrzeuginsassens gegenüber der Horizontalen bildet. Dieser vorgegebene Wert $\alpha_{soll}$ des Winkels $\alpha$ ist dann erreicht, wenn der Umlenkbeschlag 4 um einen Winkel von $\alpha_{soll/2}$ um die durch den Bolzen 14 gebildete Drehachse 19 gegenüber der Ruhelage verdreht ist. Ist der Winkel $\alpha_{ist}$ bzw. der mittels des Drehpotentiometers 13 bestimmte Wert von $\alpha_{ist/2}$ grösser bzw. kleiner als der vorgegebene Wert, so wird durch Herunter- bzw. Hinauffahren des Läufers 3 und damit des Umlenkbeschlags 4 der Anlenkwinkel $\alpha_{ist}$ korrigiert. Um z.B. bei einem schaltungstechnischen Fehler den Elektromotor 7 auszuschalten, sind an beiden Enden der Bewegungsbahn des Läufers 3 Endlagenschalter angebracht, die Abschaltsignale an die Vergleichsschaltung 10 liefern. In Fig. 1 ist der untere Endlagenschalter 20 gezeigt.

Durch die Erfindung wird es möglich, den Anlenkwinkel unabhängig von der Grösse der Fahrzeuginsassen stets auf denselben, vorgegebenen optimalen Wert einzustellen. Die Erfindung kann sowohl bei aktiven, als auch bei passiven Sicherheitsgurtsystemen angewandt werden.

**Patentansprüche**

1. Verstellvorrichtung für einen An- oder Umlenkpunkt (1) eines Sicherheitsgurts (2) in Kraftfahrzeugen, mit einem den An- oder Umlenkpunkt bildenden Läufer (3), der in einer Führung (6) vertikal so verstellbar ist, dass der Anlenkwinkel $\alpha_{ist}$ des auf der Schulter des Fahrzeuginsassen aufliegenden Sicherheitsgurts (2) einen vorgegebenen Wert $\alpha_{soll}$ besitzt, gekennzeichnet durch einen in oder am An- oder Umlenkpunkt (1) angeordneten elektrischen Geber (Drehpotentiometer 13) für den Anlenkwinkel ($\alpha_{ist}$) des Sicherheitsgurts (2) und eine diesem nachgeschaltete Vergleichsschaltung (10), die den vorgegebenen Wert $\alpha_{soll}$ als Referenzwert enthält.

2. Vorrichtung nach Anspruch 1, mit einem Antrieb für den Läufer, dadurch gekennzeichnet, dass die Vergleichsschaltung (10) einen als elektrischen Antrieb dienenden Elektromotor (7) steuert.

3. Vorrichtung nach Anspruch 2, gekennzeichnet durch eine vom Elektromotor (7) angetriebene Spindel (8) für die Höhenverstellung des Läufers (3).

4. Vorrichtung nach einem der Ansprüche 1 bis 3, dadurch gekennzeichnet, dass die Vergleichsschaltung (10) nur bei angelegtem Sicherheitsgurt eingeschaltet ist.

5. Vorrichtung nach Anspruch 4, dadurch gekennzeichnet, dass in der Stromzuführung der Vergleichsschaltung (10) ein Gurtschloss-Schalter (11) liegt, der bei angelegtem Sicherheitsgurt geschlossen ist.

6. Vorrichtung nach einem der Ansprüche 2 bis 5, gekennzeichnet durch Endlagenschalter (20) in der Bewegungsbahn des Läufers (3), die den Elektromotor (7) ausschalten.

7. Vorrichtung nach einem der Ansprüche 1 bis 6, dadurch gekennzeichnet, dass der vorgegebene Wert $\alpha_{soll}$ des Anlenkwinkels fahrzeugspezifisch ist.

8. Vorrichtung nach einem der Ansprüche 1 bis 7, dadurch gekennzeichnet, dass der Geber für den Anlenkwinkel ein Drehpotentiometer (13) ist.

9. Vorrichtung nach Anspruch 8, dadurch gekennzeichnet, dass das Drehpotentiometer (19 und 20) in einem den Anlenkwinkel einstellenden Drehgelenk (Bolzen 14) integriert ist.

## Claims

1. An adjusting device for a point (1) of articulated attachment or deviation of a safety belt (2) in motor vehicles, with a traveller (3) which forms the point of attachment or deviation being vertically displaceable in a guide (6) in such a way that the articulated attachment angle $\alpha_{actual}$ of the safety belt (2) resting on the shoulder of the vehicle occupant possesses a predetermined value $\alpha_{ideal}$, characterised by an electric detector (rotary potentiometer 13) arranged in or on the point (1) of attachment or deviation for the angle ($\alpha_{actual}$) of attachment of the safety belt (2) and a comparator circuit (10), connected in series after this detector, which contains the predetermined value ($\alpha_{ideal}$) as reference value.

2. A device according to claim 1 having a drive for the traveller, characterised in that the comparator circuit (10) controls an electric motor (7) serving as an electric drive.

3. A device according to claim 2, characterised by a spindle (8) driven by the electric motor (7) for the height displacement of the traveller (3).

4. A device according to anyone of claims 1 to 3, characterised in that the comparator circuit (10) is switched on only when the safety belt is being worn.

5. A device according to claim 4, characterised in that a belt lock switch (11), which is closed when the safety belt is being worn, lies in the current supply to the comparator circuit (10).

6. A device according to anyone of claims 2 to 5, characterised by end-position switches (20) in the path of movement of the traveller (3) which switch off the electric motor (7).

7. A device according to anyone of claims 1 to 6, characterised in that the predetermined value ($\alpha_{ideal}$) of the angle of attachment is specific to the vehicle.

8. A device according to anyone of claims 1 to 7, characterised in that the detector for the angle of attachment is a rotary potentiometer (13).

9. A device according to claim 8, characterised in that the rotary potentiometer (19 and 20) is integrated into a swivel joint (bolt 14) which adjusts the angle of attachment.

## Revendications

1. Dispositif d'ajustement pour point d'ancrage ou de renvoi (1) d'une ceinture de sécurité (2) dans des véhicules automobiles, comportant un curseur (3) formant le point d'ancrage ou de renvoi, curseur qui peut être déplacé verticalement dans un guidage (6) de telle manière, que l'angle d'ancrage ($\alpha_{effectif}$) de la ceinture de sécurité (2) appliquée sur l'épaule de l'occupant du véhicule présente une valeur prédéterminée ($\alpha_{prescrit}$), dispositif caractérisé par un transmetteur électrique (potentiomètre rotatif 13) monté dans ou sur le point d'ancrage ou de renvoi (1) pour déterminer l'angle d'ancrage ($\alpha_{effectif}$) de la ceinture de sécurité (2) et par un circuit comparateur (10) monté à la suite, et qui contient la valeur prédéterminée ($\alpha_{prescrit}$) comme valeur de référence.

2. Dispositif selon la revendication 1, comportant un entraînement pour le curseur, caractérisé en ce que le circuit comparateur (10) commande un moteur électrique (7) servant d'entraînement électrique.

3. Dispositif selon la revendication 2, caractérisé par une broche (8), entraînée par le moteur électrique (7), pour le réglage en hauteur du curseur (3).

4. Dispositif selon l'une des revendications 1 à 3, caractérisé en ce que le circuit comparateur (10) n'est mis en action que lorsque la ceinture de sécurité est appliquée.

5. Dispositif selon la revendication 4, caractérisé en ce que dans l'amenée du courant au circuit comparateur (10) est prévu un commutateur (11) du fermoir de la ceinture, qui est fermé lorsque la ceinture de sécurité est appliquée.

6. Dispositif selon l'une des revendications 2 à 5, caractérisé par des interrupteurs de fin de course (20) dans la trajectoire de déplacement du curseur (3), qui mettent hors circuit le moteur électrique (7).

7. Dispositif selon l'une des revendications 1 à 6, caractérisé en ce que la valeur prédéterminée ($\alpha_{prescrit}$) de l'angle d'ancrage est spécifique du véhicule.

8. Dispositif selon l'une revendications 1 à 7, caractérisé en ce que le transmetteur prévu pour l'angle d'ancrage est un potentiomètre rotatif (13).

9. Dispositif selon la revendication 8, caractérisé en ce que le potentiomètre rotatif (13) est intégré dans une charnière (boulon 14) réglant l'angle d'ancrage.

FIG.1

FIG.2